# EUROPÄISCHE PATENTSCHRIFT

(11) **EP 2 264 845 B1**
(45) Veröffentlichungstag und Bekanntmachung des Hinweises auf die Patenterteilung: **17.04.2019**
(21) Anmeldenummer: 10006409.6
(22) Anmeldetag: 21.06.2010
(51) Int. Cl.: H02B 1/03

(54) **Elektrische Hausinstallationsverteilung mit einem Stromzähler aufweisenden Zählerplatz**
Electric house installation distribution with a meter location comprising an electricity meter
Répartition d'installation électroménagère dotée d'un emplacement de compteur comprenant un compteur électrique

(30) Priorität: 19.06.2009 DE 102009029931; 10.06.2010 DE 202010007822 U
(43) Veröffentlichungstag der Anmeldung: 22.12.2010
(73) Patentinhaber: ABB AG, 68309 Mannheim (DE)
(72) Erfinder: Roth, Michael, 77880 Sasbach (DE)

(56) Entgegenhaltungen:
- EP-A2- 1 593 978
- DE-U- 1 966 263
- DE-U1-202005 017 605

## Beschreibung

Die Erfindung betrifft eine Hausinstallationsverteilung.

Seitens der Energieversorgungsunternehmen besteht die Aufgabe, im Zählerplatz Schalt- und/oder Steuergeräte vorzusehen, mit denen per Fernsteuerung der Strom abgeschaltet werden kann, beispielsweise dann, wenn der Stromkunde seine Stromrechnung nicht bezahlt hat. Aus der DE 20 2005 017 605 U1 ist eine Hausinstallationsverteilung der eingangs genannten Art bekannt geworden, bei der unterhalb des Stromzählers eine Trägereinrichtung vorgesehen ist, die eine Befestigungseinrichtung besitzt, die L-förmig mit einem Schenkelabschnitt, der parallel zur Bodenfläche, und mit einem weiteren Schenkelabschnitt, der senkrecht zur Bodenfläche verläuft, ausgebildet ist. Der weitere Schenkelabschnitt besitzt Füße, mit denen er auf der Bodenfläche aufsteht. Der eine Schenkelabschnitt ist an der Zählerklemme befestigt. An diese Trägereinrichtung ist eine Tragschiene, die in vertikaler Richtung verläuft, gehaltert.

Aufgabe der Erfindung ist es, eine elektrische Hausinstallationsverteilung der eingangs genannten Art zu schaffen, bei der eine Fernabschaltung nicht nur bei einem elektronischen, sondern auch bei einem konventionellen Hauhaltzähler ermöglicht wird und deren Montage durch Vormontage einiger Komponenten vereinfacht ist.. Diese Aufgabe wird erfindungsgemäß durch die Merkmale des Anspruches 1 gelöst. Erfindungsgemäß also ist eine elektrische Hausinstallationsverteilung der eingangs genannten Art dadurch gekennzeichnet, dass die Trägereinrichtung ein ringförmig geschlossenes Gehäuse mit einer Bodenwand aufweist und dass etwa in der Mitte des Gehäuses zwischen Bodenebene und freier Kante des Gehäuses wenigstens an sich gegenüberliegenden im montierten Zustand vertikal verlaufenden Seitenwänden des Gehäuses je eine Leiste angeformt ist, die parallel zur Bodenebene verläuft, und dass eine Normprofiltragschiene zur Befestigung der Schalt- und Steuergeräte auf der Leiste oder an den sich gegenüberliegenden Innenflächen der vertikal verlaufenden Seitenwände befestigt ist, und dass die Normprofiltragschiene in einem Abstand von der Bodenwand des Gehäuses angeordnet ist, wobei in dem Raum zwischen der Normprofiltragschiene und der Bodenwand Anschlussklemmen des Stromzählers und eine Hauptleitungsabzweigklemme angeordnet sind, und zwischen den Anschlussklemmen des Stromzählers und der Hauptleitungsabzweigklemme Verbindungsleitungen vorgesehen sind, die in Leitungsabschnitte aufgetrennt sind, die an wenigstens einem auf der Normprofiltragschiene befestigten Schalt- oder Steuergerät angeschlossen sind, das von dem zuständigen Energieversorgungsunternehmen durch Fernsteuerung betätigbar ist.

Eine vorteilhafte Weiterbildung der Erfindung kann dahin gehen, dass an den sich gegenüberliegenden Kanten der an den vertikal verlaufenden Seitenwandungen angeformten Leisten je eine parallel zur zugehörigen Seitenwandung verlaufende Traglasche angeformt ist, an deren freien Ende je ein Bodenabschnitt in der Bodenebene angeformt ist, an dem ein Tragbalken für die Hauptabzweigklemme befestigt ist. Dabei kann die Normprofiltragschiene an den Innenflächen der beiden vertikal verlaufenden Seitenwände des Gehäuses festgerastet oder auf der Leiste durch Schraubverbindung befestigt werden kann.

In besonders vorteilhafter Weise kann die Hauptleitungsabzweigklemme an der Bodenwand befestigt, vorzugsweise festgerastet werden.

Dabei kann an jeder Leiste ein Haltebock angeformt sein, auf dem die Normprofiltragschiene befestigbar ist.

Die Normprofiltragschiene ist in bevorzugter Weise eine Hutprofiltragschiene.

Das ringförmige Gehäuse besitzt im Bereich der dem Zähler zugewandten horizontalen Seitenwand eine Aussparung, die die Zählerklemmenleiste aufnimmt. Diese Aussparung ist im Gegensatz zur Ausführung nach der DE 20 2005 017 695 U1, bei der die Aussparung an der Abdeckung angeordnet ist, am Gehäuse vorgesehen. Damit kann das Gehäuse mit der Tragschiene und den darauf aufgeschnappten Schalt- und Steuergeräten vorgefertigt und auf der Zählerklemme befestigt werden; erst danach wird bei der erfindungsgemäßen Ausführung die Abdeckhaube aufgesetzt.

An Hand der Zeichnung, in der ein Ausführungsbeispiel der Erfindung dargestellt ist, sollen die Erfindung, weitere vorteilhafte Ausgestaltungen und Verbesserungen sowie weitere Vorteile näher erläutert und beschrieben werden.

Es zeigen:
- Fig. 1: eine perspektivische Ansicht eines Teilbereiches eines Zählerplatzes
- mit: geöffnetem Gehäuse,
- Fig. 2: eine Schnittansicht gemäß Schnittlinie II - II der Fig. 1 und

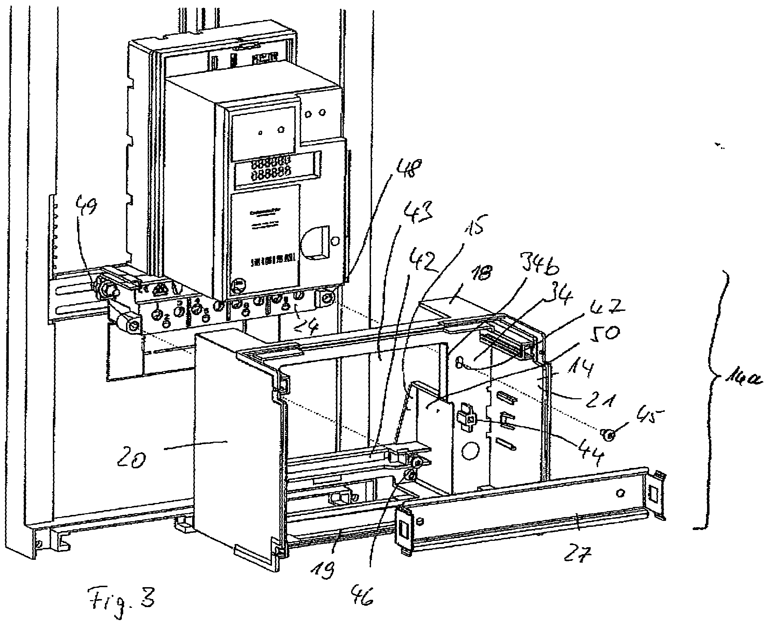

- Fig. 3: eine perspektivische Ansicht des Gehäuses für die Trägereinrichtung in Explosionsdarstellung ohne Schaltgeräte.

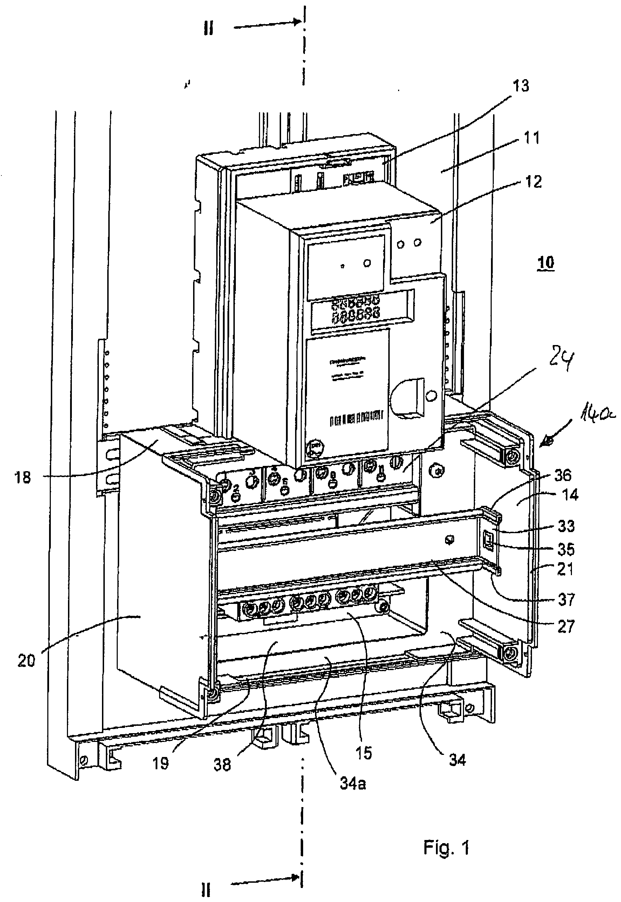

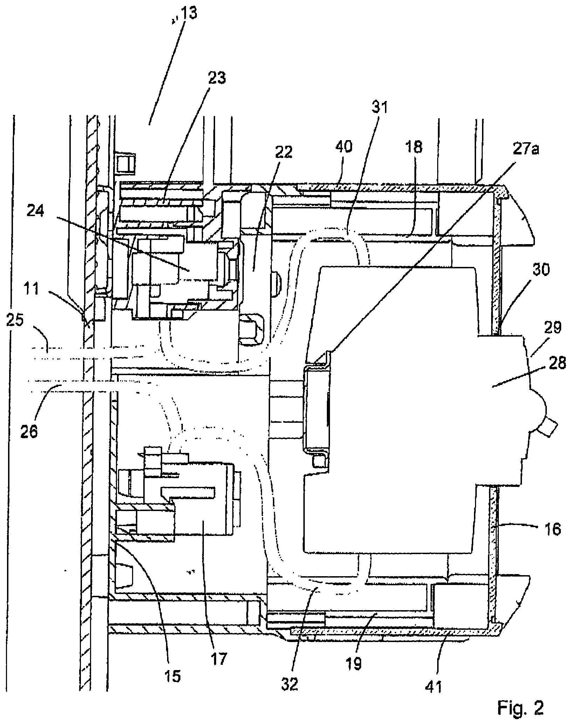

An einem Zählerplatz 10 mit einer Zählertafel 11 ist ein elektronischer Haushaltszähler 12 , kurz auch Zähler 12 genannt, auf einer Plattform 13 angeordnet. Die Plattform 13 und der Zähler 12 sind an sich bekannt und brauchen hier nicht näher beschrieben zu werden. Unterhalb des Zählers 12 befindet sich eine Trägereinrichtung 14a mit einem Gehäuse 14, dessen Abdeckung 16 (s. Fig. 2) bei der Darstellung gemäß Fig. 1 weggelassen ist, um einen Einblick in das Gehäuse 14 zu gewähren. Das Gehäuse 14 besitzt einen Bodenabschnitt 15, auf dem eine Hauptleitungsabzweigklemme 17 befestigt ist, z.B. durch Aufrasten. Das Gehäuse 14 besitzt weiterhin Seitenwände 18, 19, 20 und 21, von denen die Seitenwände 18 und 19 im montierten Zustand, also dann, wenn das Gehäuse 14 auf der Zählertafel 11 befestigt ist, horizontal verlaufen; die Seitenwand 19 befindet sich dann unten. Die Seitenwände 20 und 21 verlaufen vertikal. Die obere Seitenwand 18 besitzt einen Durchbruch 22, durch den hindurch ein Fortsatz 23 an der Plattform 13 hindurchgreift, in dem sich Anschlusselemente 24 zum Anschließen einer Zugangsleitung 25 (siehe Fig. 2) befinden. Die Zugangsleitung 25 kommt vom Energieversorgungsunternehmen (EVU) und leitet Strom in das Verbrauchernetz eines Verbrauchers. Die Anschlussklemmen 24 stehen mit dem Zähler 12 in Verbindung.

Von der Hauptleitungsabzweigklemme 17 führen Leitungen 26 zu den Verbrauchern oder zu Sicherungsgeräten, z.B. Leitungsschutzschaltern, was hier nicht dargestellt ist.

In einem bestimmten Abstand zur Bodenwand 15 ist zur Vervollständigung der Trägereinrichtung 14a eine Hutprofiltragschiene 27 an den Innenflächen der Seitenwände 20 und 21 befestigt. Die Hutprofiltragschiene 27 verläuft horizontal, wobei ihre Flanschen 27a parallel zur Bodenwand 15 und damit vertikal angeordnet sind. Auf der Hutprofiltragschiene 27 sind Steuergeräte und hier ein Schaltgerät 28 aufgeschnappt, welches mit seiner Frontwand 29 aus einer Öffnung 30 in der Abdeckung 16 herausragt.

Von den Anschlussklemmen 24 sind Leitungsabschnitte 31 zu dem Schaltgerät 28 und vom Schaltgerät 28 weitere Leitungsabschnitte 32 zur Hauptleitungsabzweigklemme 17 geführt. Somit fließt der Strom vom EVU über die Zugangsleitung 25 zu den Anschlussklemmen 24 und zum Zähler 12, vom Zähler 12 über die Anschlussklemmen 24 zum Leitungsabschnitt 31 und zum Schaltgerät 28 und vom Schaltgerät 28 über den Leitungsabschnitt 32 zur Hauptleitungsabzweigklemme 17 und dann zu den Verbrauchern über die Leitung 26 und natürlich über eine nicht dargestellte Leitung zum EVU zurück.

Am Steg der Hutprofiltragschiene 27 sind an ihren freien Enden senkrecht zu den Flanschen 27a verlaufende Laschen 33 aufgebogen, mit denen die Hutprofiltragschiene 27 an der Innenfläche der Seitenwände 20, 21 festgerastet werden kann. Zu diesem Zweck besitzen die Laschen 33 Aussparungen 35, in die an den Innenflächen der Seitenwände 20,21 angeformte nicht sichtbare Nasen einrasten können. Zur seitlichen Führung der Laschen 33 sind an den Innenflächen der Seitenwände 20,21 Führungsleisten 36, 37 angeformt.

Weiterhin sind an den Innenflächen der Seitenwände 18 bis 21 je eine Leiste 34 angeformt, die einen umlaufenden Absatz 34a bildet, auf dem die Hutprofiltragschiene 27 auch mit einer Schraubverbindung befestigt werden kann. Die Führungsleisten 36 schließen senkrecht zur Bodenwand 15 an der umlaufenden Leiste 34 bzw. dem umlaufenden Absatz 34a an und verlaufen in Richtung zur freien Endkante jeder Seitenwand 20,21. Die durch die umlaufende Leiste 34 aufgespannte Ebene verläuft parallel zur Bodenwand 15, wobei die Leiste 34 eine Zugangsöffnung 38 zur Hauptleitungsabzweigklemme 17 offen lässt.

Die Steuereinrichtung für die Fernabschaltung des Schaltgerätes 28 ist hier nicht dargestellt.

Die Abdeckung 16 besitzt eine C-Form, wobei deren Seitenwände 40, 41 an den oberen und unteren Seitenwänden 18, 19 des Gehäuses 14 anschließen.

An den aufeinander zu weisenden Kanten 34b der Leisten 34 ist je eine Traglasche 50 angeformt, die parallel zur Innenfläche der jeweiligen Seitenwand 20, 21 verläuft und an deren Enden je ein den Boden bildender Bodenabschnitt 15 angeformt ist, die aufeinander zu weisen und auf denen ein Tragbalken 42 zur Anbringung der Hauptleitungsabzweigklemme vorgesehen ist. Die umlaufenden Leisten 34, 34a lassen eine Zugangsöffnung 43 frei, durch die hindurch eine Verlegung der Verbindungsleitungen 25, 26 und ein Anschließen dieser an den Klemmen der Zähler und der Schalt- und Steuerschalter leicht möglich ist.

Auf den Leisten 34 sind Halteböcke 44 aufgesetzt bzw. angeformt, auf denen die Hutprofiltragschiene 27 aufgesetzt und darauf festgeschraubt werden kann. Dabei ist nur der eine, rechte Haltebock 44 zu sehen.

Das Gehäuse 14 kann mittels Schrauben 45, 46, die durch Löcher 47 in der Leiste 34 hindurchgreifen und in Bohrungen 48, 49 in der Zählerklemmenleiste 24 eingeschraubt werden, befestigt werden.

Die Erfindung ist beschrieben an Hand eines Zählerplatzes einer Hausinstallationsverteilung mit einem elektronischen Haushaltszähler. Die Erfindung kann natürlich auch bei einem Zählerplatz mit einem konventionellen Zähler verwendet werden. Diese Möglichkeit wird erreicht durch den Einbau der Hauptleitungsabzweigklemme in das Gehäuse und durch Auftrennen der zwischen dem Zähler oder den Anschlussklemmen des Zählers und der Hauptleitungsabzweigklemme verlaufenden Leitungen, so dass zwei Leitungsabschnitte gebildet werden, zwischen die das Schaltgerät angeschlossen werden kann.

## Patentansprüche

1. Elektrische Hausinstallationsverteilung mit einem Zählerplatz (10), wenigstens einem Stromzähler (12) und mit wenigstens einer dem Stromzähler (12) zugeordneten Trägereinrichtung (14a) zur Halterung von elektrischen Schalt- oder Steuergeräten (28), wobei die Trägereinrichtung (14a) ein ringförmig geschlossenes Gehäuse (14) mit einer Bodenwand (15) aufweist und dass etwa in der Mitte des Gehäuses (14) zwischen Bodenebene und freier Kante des Gehäuses (14) wenigstens an sich gegenüberliegenden im montierten Zustand vertikal verlaufenden Seitenwänden (20,21) des Gehäuses (14) je eine Leiste (34) angeformt ist, die parallel zur Bodenebene verläuft, und wobei eine Normprofiltragschiene (27) zur Befestigung der Schalt- und Steuergeräte auf der Leiste (34) oder an den sich gegenüberliegenden Innenflächen der vertikal verlaufenden Seitenwände (20,21) befestigt ist, und wobei die Normprofiltragschiene (27) in einem Abstand von der Bodenwand (15) des Gehäuses (14) angeordnet ist, wobei in dem Raum zwischen der Normprofiltragschiene (27) und der Bodenwand (15) Anschlussklemmen (24) des Stromzählers (12) und eine Hauptleitungsabzweigklemme (17) angeordnet sind, und zwischen den Anschlussklemmen (24) des Stromzählers (12) und der Hauptleitungsabzweigklemme (17) Verbindungsleitungen (25,26) vorgesehen sind, die in Leitungsabschnitte (31, 32) aufgetrennt sind, die an wenigstens einem auf der Normprofiltragschiene (27) befestigten Schalt- oder Steuergerät (28) angeschlossen sind, das von dem zuständigen Energieversorgungsunternehmen durch Fernsteuerung betätigbar ist.

2. Installationsverteilung nach Anspruch 1, **dadurch gekennzeichnet, daß** an den sich gegenüberliegenden Kanten der an den vertikal verlaufenden Seitenwandungen (20, 21) angeformten Leisten (34) je eine parallel zur zugehörigen Seitenwandung verlaufende Traglasche (50) angeformt ist, an deren freien Ende je ein Bodenabschnitt (15) in der Bodenebene angeformt ist, an dem ein Tragbalken (42) für die Hauptabzweigklemme befestigt ist.

3. Installationsverteilung nach Anspruch 1, **dadurch gekennzeichnet, dass** die Normprofiltragschiene (27) an den Innenflächen der beiden verlaufenden Seitenwände (20,21) des Gehäuses (14) festrastbar ist.

4. Installationsverteilung nach Anspruch 1, **dadurch gekennzeichnet, dass** die Normprofiltragschiene (27) auf der Leiste (34) durch Schraubverbindung befestigbar ist.

5. Installationsverteilung nach einem der vorigen Ansprüche, **dadurch gekennzeichnet, dass** die Hauptleitungsabzweigklemme (17) an der Bodenwand (15) befestigt, vorzugsweise festgerastet ist.

6. Installationsverteilung nach einem der vorigen Ansprüche, **dadurch gekennzeichnet, daß** an jeder Leiste (34) ein Haltebock angeformt ist, auf dem die Normprofiltragschiene (27) befestigbar ist.

7. Installationsverteilung nach einem der vorigen Ansprüche, **dadurch gekennzeichnet, dass** die Normprofiltragschiene (27) als Hutprofiltragschiene ausgebildet ist.

## Claims

1. Domestic electrical service distribution panel comprising a meter station (10), at least one electricity meter (12) and comprising at least one carrier device (14a), which is associated with the electricity meter (12), for holding electrical switching or control devices (28), wherein the carrier device (14a) has an annularly closed housing (14) with a bottom wall (15), and that, approximately in the middle of the housing (14) between the bottom plate and the free edge of the housing (14), in each case one strip (34) is integrally formed at least on opposite side walls (20, 21) of the housing (14) which run vertically in the mounted state, which strip runs parallel in relation to the bottom plane, and wherein a standard mounting rail (27) for fixing the switching and control devices is fixed on the strip (34) or to the opposite inner faces of the vertically running side walls (20, 21), and wherein the standard mounting rail (27) is arranged at a distance from the bottom wall (15) of the housing (14), wherein connection terminals (24) of the electricity meter (12) and a main line branch terminal (17) are arranged in the area between the standard mounting rail (27) and the bottom wall (15), and connecting lines (25, 26) are provided between the connection terminals (24) of the electricity meter (12) and the main line branch terminal (17), which connecting lines are split into line sections (31, 32) which are connected to at least one switching or control device (28) which is fixed on the standard mounting rail (27) and can be operated by the energy supply company responsible by remote control.

2. Service distribution panel according to Claim 1, **characterized in that** in each case one carrying lug (50) which runs parallel in relation to the associated side wall is integrally formed on the opposite edges of the strips (34) which are integrally formed on the vertically running side walls (20, 21), in each case one bottom section (15) in the bottom plane being integrally formed on the free end of the said carrying lug, and a carrying bar (42) for the main branch terminal being fixed to the said bottom section.

3. Service distribution panel according to Claim 1, **characterized in that** the standard mounting rail (27) can be fixedly latched to the inner faces of the two running side walls (20, 21) of the housing (14).

4. Service distribution panel according to Claim 1, **characterized in that** the standard mounting rail (27) can be fixed on the strip (32) by means of screw connection.

5. Service distribution panel according to one of the preceding claims, **characterized in that** the main line branch terminal (17) is fixed, preferably fixedly latched, to the bottom wall (15).

6. Service distribution panel according to one of the preceding claims, **characterized in that** a holding bracket is integrally formed on each strip (34), it being possible for the standard mounting rail (27) to be fixed on the said holding bracket.

7. Service distribution panel according to one of the preceding claims, **characterized in that** the standard mounting rail (27) is designed as a top-hat mounting rail.

## Revendications

1. Répartiteur d'installation électroménagère doté d'un emplacement de compteur (10), comprenant au moins un compteur électrique (12) et au moins un dispositif de support (14a) associé au compteur électrique (12) et destiné à supporter des appareils électriques (28) de commutation ou de commande, dans lequel le dispositif de support (14a) comporte un boîtier fermé de manière annulaire (14) et muni d'une paroi inférieure (15) et que, approximativement au centre du boîtier (14), entre le plan inférieur et le bord libre du boîtier (14), une barre respective (34) qui s'étend parallèlement au plan inférieur est formée de manière solidaire au moins sur des parois latérales opposées (20, 21) du boîtier (14) qui s'étendent verticalement à l'état monté, et dans lequel un rail porteur profilé standard (27) permettant de fixer les appareils de commutation et de commande est fixé sur la barre (34) ou sur les surfaces intérieures opposées des parois latérales (20, 21) s'étendant verticalement, et dans lequel le rail porteur profilé standard (27) est disposé de manière espacée de la paroi inférieure (15) du boîtier (14), dans lequel des bornes de connexion (24) du compteur électrique (12) et une borne de dérivation de ligne principale (17) sont disposées dans l'espace compris entre le rail porteur profilé standard (27) et la paroi inférieure (15), et il est prévu entre les bornes de connexion (24) du compteur électrique (12) et la borne de dérivation de ligne principale (17) des lignes de connexion (25, 26) qui sont séparées en tronçons de ligne (31, 32) qui sont connectés à au moins un appareil de commutation ou de commande (28) fixé sur le rail porteur profilé standard (27) et pouvant être commandé à distance par le fournisseur d'énergie compétent.

2. Répartiteur d'installation selon la revendication 1, **caractérisée en ce qu'**une patte porteuse (50) s'étendant parallèlement à la paroi latérale associée est respectivement formée sur les bords opposés des barres (34) formées de manière solidaire sur les parois latérales (20, 21) s'étendant verticalement, à l'extrémité libre de laquelle est formé un tronçon inférieur (15) dans le plan de base à laquelle est fixée une entretoise de support (42) de la borne de dérivation principale.

3. Répartiteur d'installation selon la revendication 1, **caractérisé en ce que** le rail porteur profilé standard (27) peut être fixé sur les surfaces intérieures des deux parois latérales (20, 21) s'étendant du boîtier (14).

4. Répartiteur d'installation selon la revendication 1, **caractérisé en ce que** le rail porteur profilé standard (27) peut être fixé à la barre (34) par liaison par vissage.

5. Répartiteur d'installation selon l'une des revendications précédentes, **caractérisé en ce que** la borne de dérivation de ligne principale (17) est fixée, de préférence verrouillée, à la paroi inférieure (15).

6. Répartiteur d'installation selon l'une des revendications précédentes, **caractérisé en ce qu'**un étrier de retenue sur lequel peut être fixé le rail porteur profilé standard (27) est formé d'un seul tenant sur chaque barre (34).

7. Répartiteur d'installation selon l'une des revendications précédentes, **caractérisé en ce que** le rail porteur profilé standard (27) est réalisé sous la forme d'un rail porteur profilé en forme de chapeau.
